# EUROPÄISCHE PATENTSCHRIFT

(11) **EP 0 946 629 B1**
(45) Veröffentlichungstag und Bekanntmachung des Hinweises auf die Patenterteilung: **18.09.2002**
(21) Anmeldenummer: 97953780.0
(22) Anmeldetag: 11.12.1997
(51) Int. Cl.: C08J 9/02, C08G 65/32

(54) **DRUCKELASTISCH, SCHÄUMBARER DICHTSTOFF AUF BASIS SILANMODIFIZIERTER POLYMERER**
ELASTIC FOAMABLE SILANE-MODIFIED POLYMER-BASEDSEALING MATERIAL
MATERIAU D'ETANCHEITE EXPANSE, PRESENTANT UNE GRANDE ELASTICITE EN COMPRESSION, A BASE DE POLYMERES MODIFIES AU SILANE

(30) Priorität: 20.12.1996 DE 19653388
(43) Veröffentlichungstag der Anmeldung: 06.10.1999
(73) Patentinhaber: Henkel Teroson GmbH, 69123 Heidelberg (DE)
(72) Erfinder: PRÖBSTER, Manfred, D-69226 Nussloch (DE); SCHUMACHER, Werner, D-76199 Karlsruhe (DE)
(74) Vertreter: Mathes, Nikolaus, Dr.
(86) Internationale Anmeldenummer: EP9706913
(87) Internationale Veröffentlichungsnummer: WO98028359

(56) Entgegenhaltungen:
- EP-A- 0 008 034
- EP-A- 0 531 972
- EP-A- 0 538 880
- EP-A- 0 593 863
- DE-A- 19 502 128
- PATENT ABSTRACTS OF JAPAN vol. 008, no. 098 (C-221), 9.Mai 1984 & JP 59 012947 A (KANEGAFUCHI KAGAKU KOGYO KK), 23.Januar 1984,

## Beschreibung

Die Erfindung betrifft zu einem druckelastischen Dichtstoff aushärtbare Zusammensetzungen auf der Basis von ein- oder zweikomponentigen silanfunktionellen Prepolymeren, ein Verfahren zu deren Herstellung und deren Verwendung zur Herstellung von druckelastischen Dichtungen.

Wasserdichte und/oder feuchtigkeitsdichte und/oder raschen Luft- bzw. Gasaustausch verhindernde Dichtungen werden für eine Vielzahl von Anwendungen benötigt, beispielhaft erwähnt seien Lampengehäuse, Wannenlampen, Schaltschränke, Kabelmuffen, Behälter, Kühlschranktüren und dergleichen. Bei diesen Anwendungen muß die Dichtung über einen langen Zeitraum zuverlässig die entsprechenden zu schützenden Innenräume vom Eindringen von Wasser, Feuchtigkeit und/oder Luft verhindern. Traditionell werden hierfür Dichtungen verwendet, die aus gestanzten Elastomeren hergestellt werden, eine andere Möglichkeit besteht in der Verwendung von zugeschnitten geschäumten Gummiprofilen (Moosgummi). Obwohl diese Methoden zur Abdichtung noch vielfach angewendet werden, ist ihre Verwendung sehr teuer, weil bei den Stanzprozessen sehr viel Abfall entsteht, die profilierten Stränge müssen von Hand zugeschnitten, eingelegt und verklebt werden. Vom Hersteller auf die Dimension der abzudichtenden Fuge vorgeformte Dichtungen vom Typ des O-Ringes vermeiden zwar die vorgenannten Nachteile, jedoch müssen diese Dichtungen für jeden Anwendungsfall spezifisch beim Hersteller geformt werden, wegen der hierbei notwendigen aufwendigen Lagerhaltung lohnt sich dies nur bei Massenartikeln mit einheitlichen Abmessungen.

Bei einer weiteren Art der Abdichtung werden beim Hersteller vorprofilierte, dauerplastische Dichtstoffe, z.B. auf der Basis von Butylkautschuken, in die entsprechenden Nuten bzw. auf die Flansche der Gehäuseschalen aufgelegt und die Gehäuseschalen anschließend so zusammengefügt, daß der dauerplastische Dichtstoffstrang so verformt wird, daß die gesamte Fuge abgedichtet ist.

Zur kosten- bzw. arbeitseffizienteren Herstellung von Dichtungen hat sich daher bereits seit geraumer Zeit die Technik "Formed-in-Place-" bzw. "Molded-in-Place-Gaskets" durchgesetzt. Hierbei werden Raumtemperatur-vernetzende zweikomponentige bzw. Einkomponenten-feuchtigkeitshärtende Silikondichtstoffe direkt auf eine Seite des zu dichtenden Gehäuses appliziert, worauf entweder die so extrudierte Dichtung zunächst aushärtet, und dann die zweite Gehäusekomponente daraufgesetzt wird oder die zweite Gehäusekomponente direkt daraufgesetzt wird und die Dichtung anschließend aushärtet. D. di Nicola und R. E. Ledoux geben eine Übersicht über diese Technologie in Adhesives Age, 4, 1994, S. 16 bis 22.

Für Fugen großen Querschnitts wird für das oben beschriebene Verfahren jedoch ein sehr großes Dichtstoff-Volumen benötigt, außerdem ist bei großen thermischen Expansions- bzw. Kompressionsbewegungen der abzudichtenden Gehäusehälften eine verläßliche Dichtigkeit schwer zu bewerkstelligen, da die Gehäusehälften dann beim Fügen mit großem Druck zusammengepreßt werden müßten, um auch bei großer Expansion der Fuge noch eine hinreichende Dichtigkeit zu gewährleisten. Insbesondere für diese Anwendungsfelder hat sich das "Foam-in-place-gasketing-System" als ökonomische und verläßliche Alternative durchgesetzt. Bei diesem Verfahren wird in pumpbare 1- oder 2-komponentige Dichtstoffe, meist unter hohem Druck, ein inertes Gas eingemischt, das während des Auftrags des Dichtstoffes auf die abzudichtenden Gehäuseteile expandiert und dabei eine elastische geschäumte Dichtung bildet. Für diese Technik kann eine Reihe von Dichtstoffen eingesetzt werden, beispielhaft erwähnt seien schmelzbare Materialien vom Typ des Schmelzklebstoffs, zweikomponentige Silikondichtstoffe, einkomponentig feuchtigkeitshärtende Silikondichtstoffe oder Polyurethandichtstoffe, UV-härtbare Silikon- bzw. Urethandichtstoffe, eine Übersicht über diese Technologie findet sich bei S. Hoover, Adhesives Age, 8, 1994, S. 18 bis 21. Nach diesem System hergestellt Dichtungen sind im Prinzip für jede geometrische Form geeignet, die so hergestellten Dichtungen erlauben auch bei großen Temperaturschwankungen der abzudichtenden Gehäuse eine hermetische Abkapselung. Das hierfür notwendige Applikationsgerät ist z.B. unter dem Namen "FoamMelt" ^{(R)} oder "FoamMix" ^{(R)} von der Firma Nordson bekannt. Prinzipiell bekannt war es auch, dass Dichtstoffe auf Basis silanmodifizierter Polymerer, insbesondere der sogenannten MS-Polymerer der Fa. Kanekafuchi nach diesem Verfahren geschäumt werden können. Bei der Verwendung der handelsüblichen transparenten oder eingefärbten feuchtigkeitshärtenden Silikondichtstoffen ergibt sich jedoch oftmals eine sehr unbefriedigende, grobe Schaumstruktur, die das an und für sich gute druckelastische Verhalten dieser Polymersysteme zunichte macht.

Bei der Verwendung handelsüblicher MS-Produkte ergibt sich zwar eine gute Schaumstruktur, die ausgehärteten geschäumten Formkörper weisen jedoch eine sehr geringe Rückstellung nach Belastung auf.

Die DE-A-19502128 schlägt zur Herstellung von druckelastischen Dichtungen vor, in die ein- oder mehrkomponentigen Silan-funktionellen, isocyanatfunktionellen Prepolymeren oder Polysiloxanprepolymeren Kunststoff-Mikrohohlkugeln mit elastischem Wandmaterial einzumischen. Diese Vorgehensweise hat sich durchaus bewährt und ist insbesondere für kleinvolumige Anwendungen im Handwerksbereich sehr gut geeignet, da diese Materialien keine Applikationsgeräte der oben genannten Art für das "FoamMix" - Verfahren benötigen. Sie werden in der Regel aus Standardkartuschen appliziert. Nachteil dieser Mikrohohlkugeln enthaltenden Zusammensetzungen ist jedoch die Empfindlichkeit derartiger Mischungen gegen hohe Scherung während der Herstellung und Applikation, so dass diese Zusammensetzungen für den großvolumigen industriellen Bereich nicht optimal geeignet sind.

Es bestand daher die Aufgabe, Zusammensetzungen, insbesondere auf der Basis der MS-Polymeren bereitzustellen, die sich nach dem FoamMix-Verfahren schäumen lassen, wobei die derartig geschäumten und ausgehärteten Formkörper sich durch eine hohe Rückstellung nach Druckbelastung auszeichnen sollen.

Es wurde jetzt gefunden, dass die als "Modified-silane-polymers" (MS-Polymer^{(R)}) bezeichneten reaktiven Prepolymeren auf der Basis von Oxyalkylenpolymeren mit end-und/oder seitenständigen Silangruppen zur Herstellung von druckelastischen, geschäumten Formkörpern verwenden lassen. Gegenüber den bisher hierfür eingesetzten Zusammensetzungen auf der Basis von RTV-Polysiloxanen bzw. Polyurethanen zeichnen sich die Modified-silane-polymer-basierenden Dichtstoffe durch die folgenden vorteilhaften Eigenschaften aus:
- Sie haben ein extrem breites Haftungsspektrum auf einer Vielzahl von Untergründen, insbesondere auf Dispersionslacken wird eine hervorragende Haftung erzielt,
- gleichzeitig sind sie mit einer Vielzahl von Lacken und Anstrichen, die im industriellen und handwerklichen Bereich eingesetzt werden, überlackierfähig, ohne dass es zu Verlaufsstörungen und/oder Haftungsproblemen der Lackschischt auf dem Dichtstoff kommt,
- gegenüber den herkömmlichen RTV-Silikonen weisen sie den Vorteil auf, dass sie während des Härtungsprozesses keine aggressiven Spaltprodukte wie Oxime, Amine oder Essigsäure freisetzen,
- gegenüber den Polyurethanen weisen sie den Vorteil der Abwesenheit von freien Isocyanatgruppen auf.

Es wurde jetzt überraschenderweise gefunden, dass bei der Herstellung von geschäumten Formkörpern aus Dichtstoffen auf der Basis von Modified-silane-polymeren die Füllstoffe eine entscheidende Rolle für die Verschäumung haben. Art und Menge der feinteiligen Füllstoffe beeinflussen die Regelmäßigkeit der Schaumstruktur in erheblichem Umfang. Ein zu hoher Anteil an Füllstoffen beeinträchtigt zwar nicht die Verschäumbarkeit, jedoch die elastischen Eigenschaften, insbesondere die Druckelastizität der ausgehärteten Formkörper.

Die zur erfindüngsgemäßen Herstellung von druckelastischen schäumbaren Formkörpern geeigneten Dichtstoffe weisen vorzugsweise folgende Zusammensetzung auf:
- 20 bis 60 Gew.% mindestens eines silanfunktionellen Prepolymers aufgebaut aus Polyoxyethylen- und/oder Polyoxypropylen- und/oder Polyoxybutylenketten, Polyolefinketten und/oder Polyestem, die gegebenenfalls zusätzlich Urethan-, Harnstoff- und/oder Thioethergruppierungen enthalten,
- 5 bis 50 Gew.% feinteilige Füllstoffe
- 0,5 bis 10 Gew.% hochdisperse Kieselsäure
- 5 bis 20 Gew.% Weichmacher
- 0,5 bis 10 Gew.% organofunktionelle niedermolekulare Silane als Haftvermittler und/oder Vernetzer und/oder Kettenverlängerer
- 0,5 bis 10 Gew.% weiterer Bestandteile ausgewählt aus Katalysatoren, Farbpasten, Pigmente, Trockenmittel, Treibmittel, Rheologiehilfsmittel, wobei die züsammensetzung keine Mikrohohlkugeln enthält.

Ein weiter Gegenstand der vorliegenden Erfindung ist ein Verfahren zur Herstellung von druckelastischen Formkörpern, bei dem die vorgenannten einkomponentigen Zusammensetzungen nach einem an sich bekannten Verfahren unter Druck mit Gasen und /oder niedrig siedenden Flüssigkeiten gemischt werden, anschließend diese Polymer/Gasmischung bei Umgebungsdruck, gegebenenfalls unter Formgebung, extrudiert wird, wobei die Freisetzung des Gases unter/oder der niedrigsiedenden Flüssigkeit zur Bildung eines Schaumes führt und dieser geformte Schaum unter Reaktion mit der umgebenden Luftfeuchtigkeit zu einem druckelastischen, geschäumten Formkörper aushärtet.

In analoger Weise können die vorgenannten Dichtstoff-Zusammensetzungen zweikomponentig ausgeführt werden, wobei die beiden Reaktivkomponenten vor dem Zumischen der vorgenannten Gase und / oder niedrigsiedenden Flüssigkeiten miteinander gemischt werden und nach Extrusion und Formgebung durch Reaktion der beiden Komponenten aushärten.

Silanfunktionelle Prepolymere im Sinne der vorliegenden Erfindung sind insbesondere die vorgenannten MS-Polymere der Firma Kanegafuchi. Diese Prepolymeren auf der Basis von Oxyalkylenpolymeren tragen end- und/oder seitenständige Silangruppen, wobei diese hydrolysierbare Gruppen und/ oder Hydroxylgruppen-tragende Siliciumatome haben Vorzugsweise sind diese hydrolisierbaren Gruppen C₁ bis C₄ Alkoxy- und/oder Oximatogruppen. Die Verwendung von MS-Polymeren für die Herstellung von einkomponentigen, feuchtigkeitshärtenden Dichtstoffen ist bereits mehrfach beschrieben, beispielsweise in der DE-A-4119484. Silanfunktionelle Prepolymere im Sinne dieser Erfindung können jedoch außer den vorgenannten Polyoxyalkylen-Rückgratstrukturen ("Backbone") Polyolefin und/ oder Polyestergruppierungen enthalten und ggf. zusätzlich Urethan-Harnstoff- und/oder Thioethergruppierungen enthalten.

Beispiele für geeignete Füllstoffe sind Kalksteinmehl, gemahlene Kreiden (Calciumcarbonate oder Calcium-Magnesiumcarbonate), gefällte Kreiden, Talk, Glimmer, Tone oder Schwerspat. Zusätzlich können Farbpigmente wie z.B. Titandioxid, Eisenoxide oder Ruß Verwendung finden.

Als Weichmacher können alle für Dichtstoffe üblichen Weichmacher verwendet werden, wie z.B. die diversen Phthalsäureester, Arylsulfonsäureester, Alkyl- und/oder Arylphosphate sowie deren Mischungen.

Beispiele für die als Haftvermittler und/oder Vemetzer und/oder Kettenverlängerer einzusetzenden organofunktionellen niedermolekularen Silane sind Vinylalkoxysilane, 3-Aminopropyltrialkoxysilane, 3-Glycidyloxypropyltrialkoxysilane sowie die entsprechenden Dialkoxysilane. Ggf. können auch Kombinationen der vorgenannten niedermolekularen organofunktionellen Silane eingesetzt werden.

Neben den bereits genannten hochdispersen Kieselsäuren können ggf. als weitere und/oder andere Thixotropiermittel wie z.B. Bentone, Harnstoffderivate, fibrilierte oder Pulp-Kurzfasern (z.B. Aramidfasern) oder hydrierte Rizinusölderivate eingesetzt werden.

Zur Steuerung der Härtungsgeschwindigkeit können die erfindungsgemäßen Zusammensetzungen Katalysatoren enthalten, Beispiele für geeignete Katalysatoren sind metallorganische Verbindungen wie z.B. Eisen- bzw. Zinnverbindungen, beispielhaft genannt seien hier 1,3-Dicarbonylverbindungen des Eisens oder des 2- bzw. 4-wertigen Zinns, insbesondere die Sn(II)-Carboxylate bzw. die Dialkyl-Sn-(IV)-Dicarboxylate oder die entsprechenden Dialkoxylate wie z.B. Dibutylzinndilaurat, Dibutylzinndiacetat, Dibutylzinndibutylat, Dioctylzinndiacetat, Dibutylzinnmaleat, Zinn(II)-Octoat, Zinn(II)-Phenolat oder auch Di-Acetylacetonate des 2- bzw. 4-wertigen Zinns. Weiterhin können die hochwirksamen tertiären Amine oder Amidine als Katalysatoren verwendet werden, ggf. in Kombination mit den oben genannten Zinnverbindungen. Als Amine kommen dabei sowohl acyclische als auch insbesondere cyclische Verbindungen in Frage.

Weiterhin können die erfindungsgemäßen Zusammensetzungen ggf. zusätzliche Stabilisatoren enthalten. Als "Stabilisatoren" im Sinne dieser Erfindung sind Antioxidantien, UV-Stabilisatoren oder Hydrolyse-Stabilisatoren zu verstehen. Die Auswahl dieser Stabilisatoren richtet sich zum einen nach der Hauptkomponente der Zusammensetzung und zum anderen nach den Applikationsbedingungen sowie den zu erwartenden Belastungen der Dichtungsfuge. Wenn das Prepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Wie bereits eingangs erwähnt, eignen sich die erfindungsgemäßen Dichtstoffzusammensetzungen besonders gut zur Herstellung sog. "Foamed-in-placegaskets" zur Herstellung von hermetisch schließenden Dichtungen für Lampengehäuse, Wannenlampen, Schaltschränke, Kabelmuffen, Behälter, Kühlschranktüren und dergleichen.

Nachfolgend wird die Erfindung anhand eines bevorzugten Ausführungsbeispieles näher erläutert. Die Mengenangaben im Beispiel sind Gewichtsteile, wenn nicht anders angegeben.

### Beispiel:

| | |
|---|---|
| MS-Polymer, verzweigt (1) | 570 Teile |
| Di-isononylphthalat (DINP) | 90 Teile |
| UV-Schutzmittel | 3 Teile |
| Kreide | 200 Teile |
| Aerosil | 90 Teile |
| Vinyltrimethoxysilan | 20 Teile |
| Aminosilane | 15 Teile |
| Epoxysilan | 4 Teile |
| Katalysatorlösung(2) | 8 Teile |

| | |
|---|---|
| (1) Bis[3-(Methyldimethoxysilyl)propyl]polyoxypropylen, Funktionalität >2 | |
| (2) Bestehend aus Dibutylzinndibutylat (58.3 Teile) DINP (34.7 Teile), Toluylsulfonylisocyanat (6.9 Teile) | |

Aus dem oben angegebenen Dichtstoff wurden geschäumte Prüflinge mit der Dicke von 7 mm hergestellt und durch Reaktion mit der Umgebungsfeuchte ausgehärtet. Anschließend wurde der Prüfkörper für 24 h auf 4 mm zusammengedrückt und danach entspannt. Das Rückstellvermögen wurde in Abhängigkeit von der Zeit ermittelt (Relaxationszeit). In analoger Weise wurde ein handelsüblicher Dichtstoff auf Basis von MS-Polymeren, Terostat-930 der Fa. Teroson, ein handelsüblicher Dichtstoff auf Basis von Silikonpolymeren, Terostat-64 der Fa. Teroson sowie ein Dichtstoff gemäß EP 538880 ausgehärtet und einem Druckverformungsversuch in Anlehnung an die DIN 53517 unterworfen. Das Rückstellungsvermögen dieser vier geschäumten Formmassen ist in der Figur 1 in Abhängigkeit von der Relaxationszeit dargestellt. Dabei entspricht die Kurve **1** dem Terostat-930, die Kurve **4** dem in der EP 538880 offenbarten Zusammensetzung, die Kurve **2** stellt das Rückstellvermögen eines Formkörpers aus der erfindungsgemäßen Zusammensetzung dar und die Kurve **3** wurde mit einem Formkörper aus dem Silikondichtstoff ermittelt.

Aus der Figur ist klar ersichtlich, dass der Formkörper aus dem Silikondichtstoff zwar das beste Rückstellvermögen hat, jedoch die oben beschriebenen Nachteile bezüglich der Spaltprodukte während des Härtungsvorganges sowie die negativen Eigenschaften in bezug auf Haftverhalten und Überlackierfähigkeit aufweist. Von den drei übrigen Formkörpern weist der aus der erfindungsgemäßen Zusammensetzung hergestellte Formkörper eindeutig das beste Rückstellvermögen auf.

## Patentansprüche

1. Verwendung von ein- oder zweikomponentigen härtbaren Zusammensetzungen auf der Basis von Silan-funktionellen Prepolymeren zur Herstellung von druckelastischen, geschäumten Formkörpern, **dadurch gekennzeichnet, daß** die Zusammensetzung folgende Bestandteile enthält
a) 20-60 Gew.% mindestens eines silanfunktionellen Prepolymers, aufgebaut aus Polyoxyethylen- und/oder Polyoxypropylen- und/oder Polyoxybutylenketten, Polyolefinketten und/oder Polyestern, die gegebenenfalls zusätzlich Urethan-, Harnstoff- und/oder Thioethergruppierungen enthalten,
b) 5-50 Gew.% feinteilige Füllstoffe,
c) 0.5-10 Gew.% hochdisperse Kieselsäure,
d) 5-20 Gew.% Weichmacher,
e) 0.5-10 Gew.% organofunktionelle niedermolekulare Silane als Haftvermittler und/oder Vernetzer oder Kettenverlängerer,
f) 0.5-10 Gew.% weiterer Bestandteile, ausgewählt aus Katalysatoren, Farbpasten, Pigmente, Trockenmittel, Treibmittel, Rheologiehilfsmittel,
wobei die Zusammensetzung keine Mikrohohlkugeln enthält.

2. Verwendung gemäß Anspruch 1, **dadurch gekennzeichnet, daß** das/die Silan-funktionelle(n) Prepolymer(en) end- und/oder seitenständige Silangruppen enthält/enthalten, wobei die Silangruppen hydrolisierbare Gruppen und/oder Hydroxylgruppen-tragende Siliciumatome haben.

3. Verwendung gemäß einem der vorhergehenden Ansprüche, **dadurch gekennzeichnet, daß** die hydrolisierbaren Gruppen C₁ bis C₄ Alkoxyund/oder Oximatogruppen sind.

4. Verfahren zur Herstellung von-druckelastischen Forrnkörpern, **dadurch gekennzeichnet, daß** die einkomponentigen Zusammensetzungen gemäß einem der vorhergehenden Ansprüche
a) nach an sich bekannten Verfahren unter Druck mit Gasen und/oder niedrigsiedenden Flüssigkeiten gemischt werden,
b) die Polymer/Gasmischung bei Umgebungsdruck ggf unter Formgebung extrudiert wird, wobei die Freisetzung des Gases und/oder der niedrigsiedenden Flüssigkeit zur Bildung eines Schaumes führt,
c) und dieser geformte Schaum unter Reaktionen mit der umgebenden Luftfeuchte zur einem druckelastischen geschäumten Formkörper aushärtet.

5. Verfahren gemäß Anspruch 4, **dadurch gekennzeichnet, daß** die Komponenten der zweikomponentigen Zusammensetzung vor dem Schritt a) aus Anspruch 4 gemischt werden und die Aushärtung gemäß Schritt c) durch Reaktion der beiden Komponenten erfolgt.

## Claims

1. The use of one- or two-component curable compositions based on silane-functional prepolymers for the production of compressible foamed mouldings, **characterized in that** the composition contains the following constituents:
a) 20 to 60% by weight of at least one silane-functional prepolymer made up of polyoxyethylene and/or polyoxypropylene and/or polyoxybutylene chains, polyolefin chains and/or polyesters which may also contain urethane, urea and/or thioether groups,
b) 5 to 50% by weight of fine-particle fillers,
c) 0.5 to 10% by weight of highly disperse silica,
d) 5 to 20% by weight of plasticizers,
e) 0.5 to 10% by weight of organofunctional low molecular weight silanes as coupling agents and/or crosslinking agents or chain extenders,
f) 0.5 to 10% by weight of other constituents selected from catalysts, pigment pastes, pigments, drying agents, blowing agents, flow aids,
the composition being free from hollow microbeads.

2. The use claimed in claim 1, **characterized in that** the silane-functional prepolymer(s) contain(s) terminal and/or lateral silane groups, the silane groups having hydrolyzable groups and/or hydroxyl-group-containing silicon atoms.

3. The use claimed in any of the preceding claims, **characterized in that** the hydrolyzable groups are C₁₋₄ alkoxy and/or oximato groups.

4. A process for the production of compressible mouldings, **characterized in that** the one-component compositions according to any of the preceding claims
a) are mixed under pressure with gases and/or low-boiling liquids by methods known per se,
b) the polymer/gas mixture is extruded and optionally moulded at ambient pressure, the release of the gas and/or the low-boiling liquid leading to the formation of a foam, and
c) the moulded foam is cured by reaction with the surrounding atmospheric moisture to form a compressible foamed moulding.

5. A process as claimed in claim 4, **characterized in that** the components of the two-component composition are mixed before step a) of claim 4 and the curing step c) is carried out by reacting the two components.

## Revendications

1. Utilisation de compositions durcissables à un ou deux composants, à base de prépolymères à fonctions silane, pour la préparation d'articles moulés moussés, élastiques sous pression, **caractérisée en ce que** la composition contient les constituants suivants
a) 20 à 60% en poids d'au moins un prépolymère à fonctions silane, élaboré à partir de chaînes polyoxyéthylène et/ou polyoxypropylène et/ou polyoxybutylène, de chaines polyoléfine et/ou de polyesters, qui contiennent le cas échéant, en outre des groupements uréthanne, urée et/ou thioéther ;
b) 5 à 50% en poids de charge à fines particules ;
c) 0,5 à 10% en poids d'acide silicique fortement dispersé ;
d) 5 à 20% en poids de plastifiant ;
e) 0,5 à 10% en poids de silane organofonctionnel de faible poids moléculaire, comme agent adhésif et/ou réticulant et/ou agent d'allongement de chaine ;
f) 0,5 à 10% en poids d'autres constituants choisis parmi les catalyseurs, les pâtes teintées, les pigments, les agents desséchants, les agents moussants, les auxiliaires de rhéologie, où la composition ne contient pas de microbilles creuses.

2. Utilisation suivant la revendication 1, **caractérisée en ce que** le ou les prépolymères à fonctions silane contiennent des radicaux silane terminaux et/ou latéraux, où les radicaux silane ont des radicaux hydrolysables et/ou des atomes de silicium portant des radicaux hydroxyle.

3. Utilisation suivant l'une quelconque des revendications précédentes, **caractérisée en ce que** les radicaux hydrolysables sont des radicaux oximato et/ou alcoxy en C₁ à C₄.

4. Procédé de préparation d'articles moulés élastiques sous pression, **caractérisé en ce que** les compositions à un composant suivant l'une quelconque des revendications précédentes,
a) sont mélangées par un procédé connu en soi, sous pression avec des gaz et/ou liquides de faible point d'ébullition ;
b) le mélange polymère/gaz est extrudé à la pression ambiante, le cas échéant avec façonnage, où la libération du gaz et/ou du liquide de faible point d'ébullition conduit à la formation d'une mousse, et
c) cette mousse formée durcit par réaction avec l'humidité ambiante en un article moulé moussé élastique sous pression.

5. Procédé suivant la revendication 4, **caractérisé en ce que** les composants de la composition à deux composants sont mélangés avant l'étape a) de la revendication 4 et le durcissement suivant l'étape c) est réalisé par la réaction des deux composants.
